# EUROPEAN PATENT SPECIFICATION

(11) **EP 2 361 668 B1**
(45) Date of publication and mention of the grant of the patent: **08.04.2020**
(21) Application number: 11154550.5
(22) Date of filing: 15.02.2011
(51) Int. Cl.: B01D 53/34, B01D 53/40, B01D 53/70, B01D 53/72, B01D 53/75, B01D 53/78, B01D 53/00, F23G 7/06

(54) **Apparatus for purifying industrial exhaust gas**
Apparat zur Reinigung industrieller Abgase
Dispositif de purification des gaz d'échappement industrielles

(30) Priority: 18.02.2010 IT MI20100250
(43) Date of publication of application: 31.08.2011
(73) Proprietor: INNOVATERM S.r.l., 21047 Saronno (VA) (IT)
(72) Inventor: Ostini, Giorgio Enrico, 21047 Saronno VA (IT)
(74) Representative: Zanoli, Enrico

(56) References cited:
- DE-A1- 2 358 678
- DE-A1- 4 432 316
- DE-A1-102006 002 645
- US-A- 5 658 541
- US-A1- 2004 123 880
- US-A1- 2006 084 017
- US-A1- 2008 029 001

## Description

The present invention relates to an apparatus for purifying industrial exhaust gas.

It is known that industrial processes (for example of the chemical type) may produce exhaust gases containing pollutants. In general, the industrial exhaust gases are purified before being emitted into the atmosphere, namely the pollutants contained in them are completely removed or reduced to concentration levels considered to be harmless.

A known process for purifying industrial exhaust gases is thermal oxidation. This process envisages heating the gas to a temperature at which the pollutants contained in them oxidise.

Thermal oxidation is usually carried out inside a thermal combustion unit, namely an apparatus which comprises a combustion chamber having inside it a burner able to heat the gas to the oxidation temperature of the pollutant. A particular type of thermal combustion unit is the so-called "regenerative thermal combustion unit". A regenerative thermal combustion unit generally comprises, in addition to the combustion chamber with burner, two heat exchangers. The combustion chamber is provided with two access points, and each heat exchanger is located at a respective access point. During operation, the gas to be purified passes through one of the heat exchangers, which releases part of its heat, and enters into the combustion chamber. Inside the combustion chamber the gas undergoes thermal oxidation by means of the burner. Then, the gas exits the combustion chamber and passes through the other heat exchanger, which recovers part of its heat. Periodically, the direction in which the gas flows through the combustion chamber is reversed. In this way, the heat exchanger which, during a first period, recovered heat from the outgoing gas may, during the following period, release it to the incoming gas.

US 2004/123880 discloses (Fig. 2) a method and apparatus for thermal oxidation comprising a combustion chamber (105), heat exchanger masses (112m, 122a, 132a) and a washing system (160, 170, 180).

DE 44 32 316 discloses (Fig. 1, 2) a method and apparatus for thermal oxidation comprising a combustion chamber (4), heat exchanger masses (11, 21,31, 16, 26, 36) and a spray system (14, 24, 34) to insert ammonia for catalytic NOx conversion.

US 2008/029001 discloses (Fig. 27) a method and apparatus for thermal oxidation comprising a combustion chamber (6), heat exchanger masses (3) and a spraying system (54) to cool the treated gas.

DE 23 58 678 describes a regenerative thermal combustion unit which is provided with nozzles, between the access points to the combustion chamber and the heat exchangers, which spray the gas coming out of the combustion chamber with water in order to lower its temperature.

Thermal oxidation is typically used to treat industrial exhaust gases containing volatile organic compounds (in short, VOCs), namely compounds which have a vapour pressure of 0.01 KPa at the temperature of 293.15 K (namely 20°C). Examples of VOCs are hydrocarbons containing carbon and hydrogen as the only elements (alkenes and aromatic compounds) and compounds containing oxygen, chlorine or other elements among carbon and hydrogen, such as aldehydes, ethers, alcohol, esters, ketones, chlorofluorocarbons (CFCs) and hydrofluorocarbons (HCFCs).

The inventor has noted that, in the case where the VOC contained in the industrial exhaust gas is a halogenated organic compound (for example, methylene chloride), the thermal oxidation which takes places inside the combustion chamber breaks down the halogenated organic compound and produces as a reaction product halogen molecules which, during the subsequent gas cooling, form an acid (hydrochloric acid, in the case of methylene chloride). Since the thermal combustion unit is typically made of a ferrous alloy, the acid disadvantageously corrodes the surfaces of the thermal combustion unit with which it comes into contact at the exit of the combustion chamber.

Therefore, an object of the present invention is to provide an apparatus for purifying industrial exhaust gas which solves the abovementioned problem.

In particular, an object of the present invention is to provide an apparatus for purifying industrial exhaust gas in which the corrosion of the surfaces of the apparatus by means of acids produced during cooling after the combustion process is minimized.

The inventor has perceived that this problem is solved by an apparatus for purifying exhaust gas, comprising a combustion chamber with two or more access points, in which the gas undergoes combustion, and a heat exchange and washing branch connected to each access point of the combustion chamber. Each heat exchange and washing branch comprises a heat exchanger and a washing system which sprays the gas with a washing solution able to neutralize the acid which forms during cooling of the gas. In this way, advantageously, the acid present in the gas is removed by the washing system during and immediately after cooling of the gas and cannot corrode the surfaces of the apparatus.

According to one aspect of the invention, an apparatus for purifying an industrial exhaust gas is provided, said apparatus comprising:
- a combustion chamber having at least two access points, the combustion chamber inducing thermal oxidation of at least one pollutant contained in the industrial exhaust gas, and
- at least two heat exchange and washing branches, each of the two heat exchange and washing branches being connected to a respective access point of the combustion chamber, each of the at least two heat exchange and washing branches comprising a heat exchanger which cools the gas, the cooling producing an acid, and a washing system which sprays the gas with a washing liquid, so as to neutralize the acid.

Each of the at least two heat exchange and washing branches includes a respective first housing inside which the washing system is housed.

The first housing has walls comprising a metal lined internally and externally with an anti-corrosion material.

Preferably, the metal comprises iron or a ferrous alloy.

In each of the at least two heat exchange and washing branches the heat exchanger is located between the combustion chamber and the washing system.

The heat exchanger comprises a bed of ceramic masses and a supporting grid on which the ceramic masses rest.

According to preferred embodiments, the ceramic masses are positioned in an ordered manner on the supporting grid.

Preferably, the washing system is configured to spray the gas with the washing liquid while the gas passes through a portion of the heat exchanger.

Each of the at least two heat exchange and washing branches includes a respective second housing inside which the heat exchanger is housed, the second housing being arranged between the first housing and the combustion chamber.

Advantageously, the first housing is connected to the second housing in a removable manner.

The combustion chamber comprises three access points, the apparatus comprising three heat exchange and washing branches, each of the three heat exchange and washing branches being connected to a respective access point of the combustion chamber, each of the three heat exchange and washing branches comprising a respective washing system and a respective heat exchanger.

Preferably, the apparatus is configured to operate according to a first operating cycle, a second operating cycle and a third operating cycle which are cyclically repeated, wherein:
- during the first operating cycle, in a first heat exchange and washing branch of the three heat exchange and washing branches, the gas receives heat before thermal oxidation and, in a second heat exchange and washing branch of the three heat exchange and washing branches, the gas releases heat and is sprayed with the washing liquid after thermal oxidation;
- during the second operating cycle, in the second heat exchange and washing branch, the gas receives heat before thermal oxidation and, in a third heat exchange and washing branch of the three heat exchange and washing branches, the gas releases heat and is sprayed with the washing liquid after thermal oxidation; and
- during the third operating cycle, in the third heat exchange and washing branch, the gas receives heat before thermal oxidation and, in the first heat exchange and washing branch, the gas releases heat and is sprayed with the washing liquid after thermal oxidation.

Preferably, each of the three heat exchange and washing branches has a blow aperture.

Advantageously, the apparatus is configured so that:
- during the first operating cycle, a flow of clean air enters into the apparatus through the third heat exchange and washing branch and exits from the apparatus through the second heat exchange and washing branch;
- during the second operating cycle, a flow of clean air enters into the apparatus through the first heat exchange and washing branch and exits from the apparatus through the third heat exchange and washing branch; and
- during the third operating cycle, a flow of clean air enters into the apparatus through the second heat exchange and washing branch and exits from the apparatus through the first heat exchange and washing branch.

Advantageously, the gas contains a mixture of at least one halogenated organic solvent and/or at least one non-halogenated organic solvent.

The present invention will emerge more clearly from the following description, provided by way of a non-limiting example, to be read with reference to the accompanying drawings in which:
- Figure 1 is a front cross-sectional view of an apparatus for purifying industrial exhaust gas according to an embodiment of the present invention;
- Figure 2 is a side cross-sectional view of the apparatus of Figure 1;
- Figure 3 is a top cross-sectional view of the apparatus of Figure 1;
- Figures 4a-4c illustrate three different operating cycles of the apparatus; and
- Figures 5a-5d show flow diagrams of four different examples of the mode of operation of the apparatus.

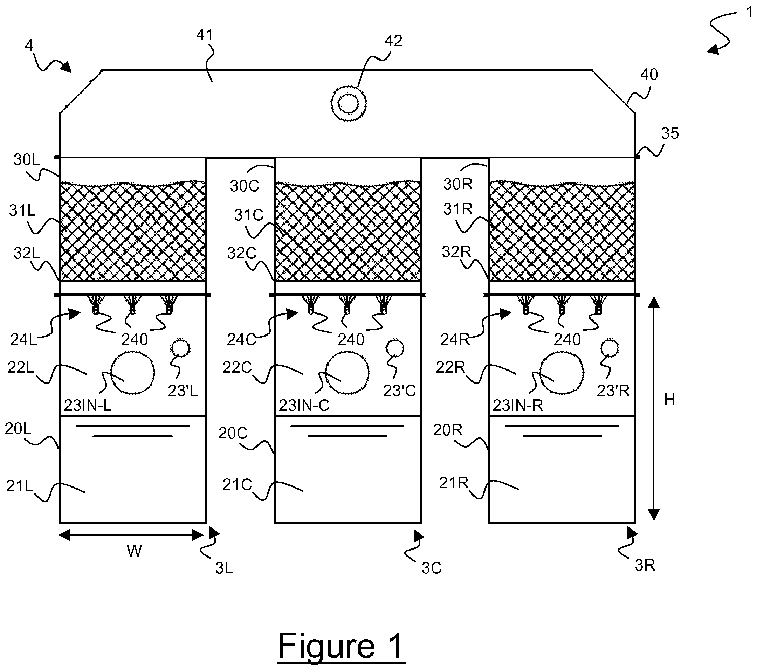

With reference to Figures 1, 2 and 3 an apparatus 1 for purifying industrial exhaust gas according to an embodiment of the present invention is now described. The various figures are not shown to scale.

The apparatus 1 preferably comprises a number of heat exchange and washing branches 3L, 3C, 3R greater than or equal to two and a combustion section 4. Purely by way of example, the apparatus according to 1 comprises three heat exchange and washing branches 3L, 3C, 3R.

Each heat exchange and washing branch 3L, 3C, 3R preferably comprises a first housing 20L, 20R, 20C which forms a collection chamber 21L, 21C, 21R and a washing chamber 22L, 22C, 22R located above the collection chamber 21L, 21C, 21R and communicating therewith. Moreover, each heat exchange and washing branch 3L, 3C, 3R preferably comprises a second housing 30L, 30R, 30C which forms a heat exchange chamber 31L, 31C, 31R located above the washing chamber 22L, 22C, 22R and communicating therewith. The first housings 20L, 20R, 20C are preferably connected in a removable manner to the second housings 30L, 30R, 30C by means of respective welds.

The first housings 20L, 20R, 20C are preferably made of a metallic material (for example, iron or a ferrous alloy) lined internally with an anti-corrosion material (for example, fibreglass). For example, the iron has a corrodibility of 1.16 mm/year in the presence of an acid which, in contact with the iron, generates a potential difference of 1 Ampere/m². More preferably, the metallic material is also lined externally with an anti-corrosion material. Alternatively, the three housings 20L, 20R, 20C may be made of a plastic with a low corrodibility, such as PP (polypropylene), PVC (polyvinyl chloride) or PVDF (polyvinylidene fluoride). Alternatively, the first housings 20L, 20R, 20C may be made of a metallic material with a low corrodibility, such as titanium or Hastelloy.

The first housings 20L, 20R, 20C have a height H preferably of between 2000 mm and 3100 mm, and more preferably equal to 2850 mm. Moreover, each of the first housings 20L, 20R, 20C has a width W preferably of between 1000 mm and 5000 mm, and more preferably equal to 3000 mm. Moreover, each of the first housings 20L, 20R, 20C has a depth L preferably of between 1300 mm and 3300 mm, and more preferably equal to 2000 mm.

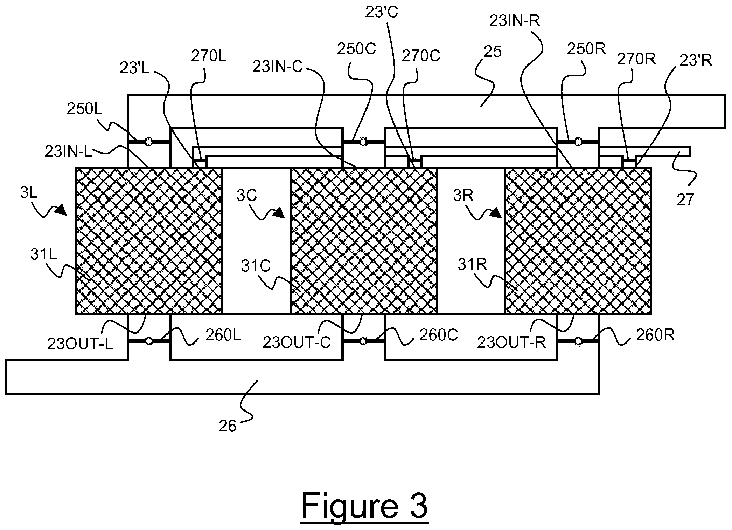

Each heat exchange and washing branch 3L, 3C, 3R comprises, at the washing chamber 22L, 22C, 22R, a respective outlet opening 23OUT-L, 23OUT-C, 23OUT-R located on a first side of the apparatus 1 and a respective inlet opening 23IN-L, 23IN-C, 23IN-R located on the opposite side of the apparatus 1. Each inlet opening 23IN-L, 23IN-C, 23IN-R is suitable for being connected to a gas input circuit 25 (shown in Figure 3). The gas input circuit 25 is preferably provided with a respective valve 250L, 250C, 250R (shown in Figure 3) for each inlet opening 23IN-L, 23IN-C, 23IN-R, so as to allow or prevent the through-flow of the gas. Similarly, each outlet opening 23OUT-L, 23OUT-C, 23OUT-R is suitable for being connected to a gas output circuit 26 (shown in Figure 3). The gas output circuit 26 is preferably provided with a respective valve 260L, 260C, 260R (shown in Figure 3) for each outlet opening 23OUT-L, 23OUT-C, 23OUT-R, so as to allow or prevent the through-flow of the gas. The valves 250L, 250C, 250R and 260L, 260C, 260R are preferably butterfly or disc valves. The gas output circuit 26 may also be provided with a droplet eliminator (not shown in the figures) located downstream of the valves 260L, 260C, 260R. The droplet eliminator advantageously removes any droplets of water present in the gas flow which flows out of the apparatus 1 through the gas output circuit 26.

Preferably, the gas input circuit 25 is suitable for connecting the apparatus 1 to an industrial plant (not shown in the drawings) which produces industrial exhaust gas to be purified. Preferably, the gas output circuit 26 is sutable for being connected to fans which facilitate evacuation of the purified gases from the apparatus 1 and their release into the atmosphere. As an alternative to the fans, it is possible to envisage that the pressure inside at least part of the apparatus 1 is higher than atmospheric pressure. In this case, the purified gas is emitted without the use of fans.

Each heat exchange and washing branch 3L, 3C, 3R also comprises, on the washing chamber 22L, 22C, 22R, a respective blow aperture 23'L, 23'C, 23'R. Each blow aperture 23'L, 23'C, 23'R is suitable for being connected to a blowing circuit 27 (shown in Figure 3). The blowing circuit 27 is preferably provided with a respective valve 270L, 270C, 270R (shown in Figure 3) for each blow aperture 23'L, 23'L, 23'R, so as to allow or prevent the passage of a clean air flow (as will be described in greater detail below). The valves 270L, 270C, 270R are also preferably butterfly or disc valves.

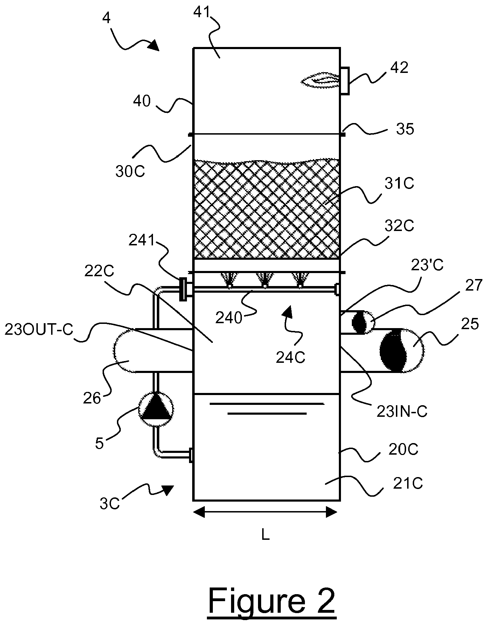

Preferably, each heat exchange and washing branch 3L, 3C, 3R also comprises a respective washing system 24L, 24C, 24R. Each washing system 24L, 24C, 24R preferably comprises one or more pipes 240 (three for example, in the apparatus 1 shown in the figures) which pass through the respective washing chamber 22L, 22C, 22R and which emerge from the first housing 20R, 20C, 20L on the front side of the apparatus 1. The front side of the apparatus 1 is provided with a recirculating pump 5 (shown in Figure 2) having its inlet connected to the collection chambers 21L, 21C, 21R and outlet connected to the pipes 240 of the washing systems 24L, 24C, 24R. The recirculating pump 5 is preferably provided with a pressure control system (not shown in the Figures). Each pipe 240 is provided with nozzles (visible in Figure 2). The nozzles are preferably directed upwards so as to spray upwards the washing liquid which flows inside the pipes 240. Each pipe 240 is also provided with a respective valve 241 which allows alternate closing or opening of the pipe 240 so as to allow or prevent the through-flow of the washing liquid. The valves 241 are preferably directional valves. The pipes are preferably made of titanium. The nozzles are preferably made of titanium or PVDF (polyvinylidene fluoride). Each pipe 240 is preferably provided with a flowmeter configured to detect the through-flow of liquid inside the pipe 240.

The second housings 30L, 30R, 30C are preferably made of a metal alloy (for example, a steel-carbon alloy) and preferably are lined internally with a heat-insulating material (for example, a high-density ceramic fibre).

Each heat exchange chamber 31L, 31C, 31R houses a respective heat exchanger which is preferably made as a bed of ceramic masses resting on a supporting grid 32L, 32C, 32R. The ceramic masses may be arranged in an ordered manner (for example in a honeycomb arrangement) or in a random manner on top of the supporting grid 32L, 32C, 32R. The ceramic masses may be made of silicon oxide, aluminium oxide or an oxide of noble metals. The supporting grids 32L, 32C, 32R are preferably made of fibreglass or a bisphenol plastic.

The combustion section 4 preferably comprises a third housing 40 which forms a combustion chamber 41. The third housing 40 is preferably made of a metal alloy (for example, a steel-carbon alloy) and preferably is lined internally with a heat-insulating material (for example, a high-density ceramic fibre). The walls of the third housing 40 have preferably a thickness greater than or equal to 3 mm. The combustion chamber 41 preferably has a number of access points equal to the number of heat exchange and washing branches 3L, 3C, 3R. The combustion section 4 is preferably located above the heat exchange and washing branches 3L, 3C, 3R so that each of its access points is located opposite a respective heat exchange chamber 31L, 31C, 31R. This is cited merely by way of an example since the relative position of the combustion section 4 and the heat exchange and washing branches 3L, 3C, 3R may be different. For example, the combustion section 4 may be positioned alongside the heat exchange and washing branches 3L, 3C, 3R provided that the combustion chamber 41 is always in communication with the heat exchange chambers 31L, 31C, 31R.

The third housing 40 is preferably connected to the second housings 30L, 30C, 30R by means of a flanged connection provided with a seal 35. The seal 35 is preferably made of ceramic fibres.

Moreover, the combustion section 4 preferably comprises at least one burner 42 located inside the combustion chamber 41. The burner 42 is preferably connected to a supply line (not shown in the figures), such as a methane, LPG or gas-oil supply line, or an electric power supply line.

The apparatus 1 further comprises a control system (not shown in the figures) which allows automatic configuration of the valves 250L, 250C, 25R of the gas input circuit 25, the valves 260L, 260C, 260R of the gas output circuit 26, the valves 270L, 270C, 270R of the blowing circuit 27, the valves 241 of the pipes 240 of the washing systems 24L, 24C, 24R and the recirculating pump 5. The apparatus 1 further comprises a pH control system able to measure the pH value of the liquid collected inside the collection chambers 21L, 21C, 21R.

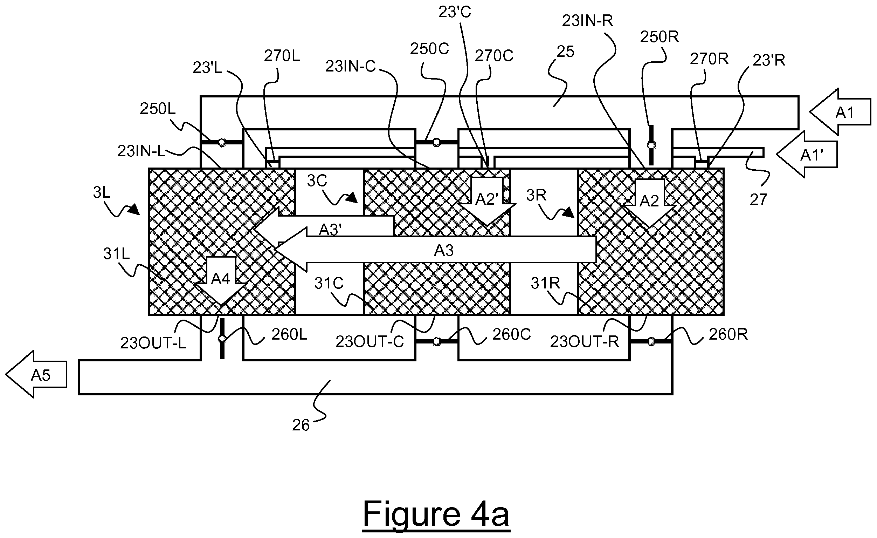

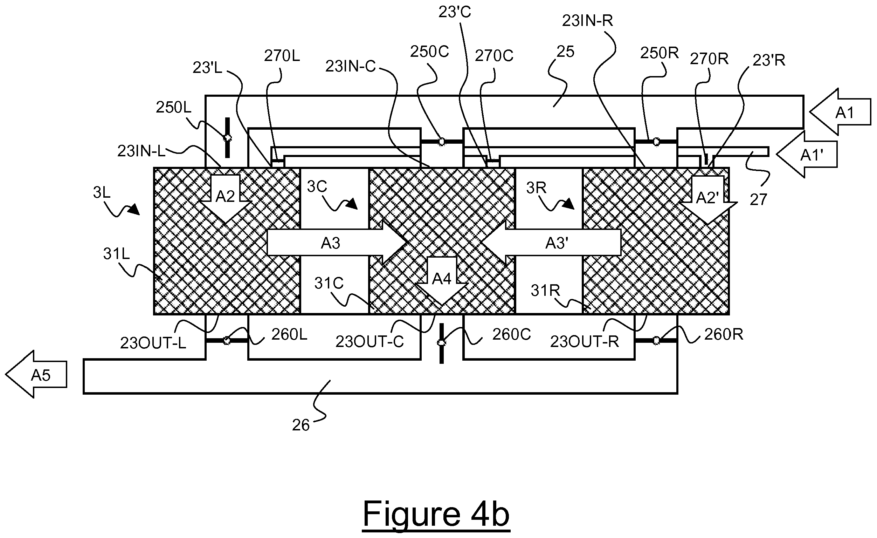

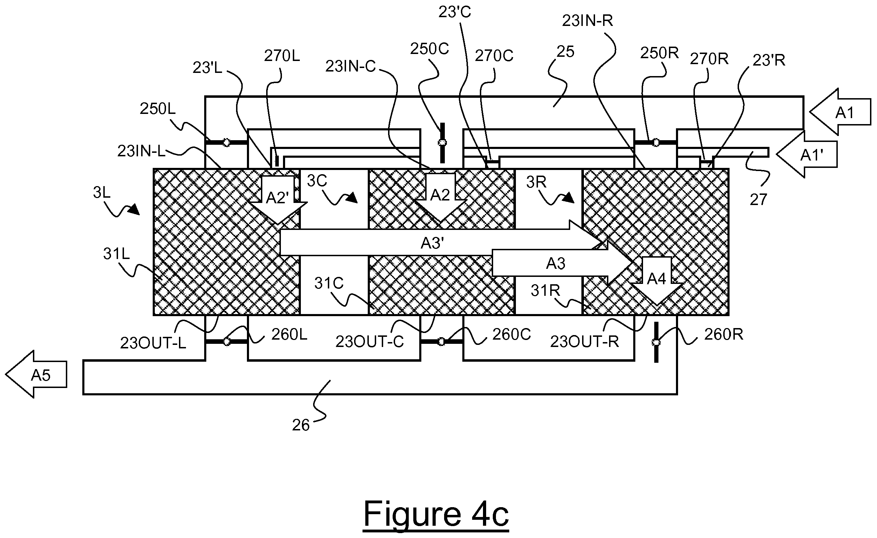

Below, with reference to Figures 4a, 4b and 4c, operation of the apparatus 1 according to an embodiment of the present invention will now be described. Let us assume use of the apparatus 1 for purifying industrial exhaust gases containing a halogenated organic compound such as methylene chloride (molecular formula: CH₂Cl₂, molecular weight: 84.93 grammes/mole).

Operation of the apparatus 1 envisages three successive operating cycles which are periodically repeated over time. Each operating cycle has preferably a duration of between 60 seconds and 180 seconds.

During each operating cycle, only one of the valves 250L, 250C, 250R of the gas input circuit 25 is open, so that the gas is able to enter into only one of thee heat exchange and washing branches 3L, 3C, 3R (referred to below as "operative input branch"). Moreover, during each operating cycle, only one of the valves 260L, 260C, 260R of the gas output circuit 26 is open, so that the gas is able to exit from the apparatus 1 through only one of the heat exchange and washing branches 3L, 3C, 3R (referred to below as "operative output branch"). Preferably, during each operating cycle, the operative input branch is different from the operative output branch. Therefore, during each operating cycle there is non-operative branch (i.e. the remaining branch).

Preferably, during each operating cycle, only the valve 270L, 270C, 270R of the blowing circuit 27 corresponding to the non-operative branch is open. Preferably, moreover, during each operating cycle, the valves 241 of the pipes 240 are configured so that the washing liquid may flow only inside the pipes 240 of the washing system 24L, 24C, 24R of the operative output branch.

For example, during a first operating cycle (shown in Figure 4a), the valve 250R is open (such that the operative input branch is the branch 3R), and the valve 260L is open (such that the operative output branch is the branch 3L). The non-operative branch is therefore the branch 3C, and the valve 270C is consequently open. Moreover, the valves 241 of the washing system 24C are open.

Preferably the washing liquid is an aqueous solution containing a reagent able to bond with the acid produced by the cooling following thermal oxidation which occurs inside the combustion chamber 41 (i.e. hydrochloric acid in the present example). The washing liquid is preferably a basic aqueous solution. For example, the washing liquid may be an aqueous solution containing sodium hydroxide (molecular formula: NaOH, molecular weight: about 40 grammes/mole).

During the first operating cycle (Figure 4a), the industrial exhaust gas to be purified enter into the gas input circuit 25 (as indicated by the arrow A1 in Figure 4a) and, passing through it, enters into the operative input branch 3R via the inlet opening 23IN-R (as indicated by the arrow A2 in Figure 4a). In the operative input branch 3R, the gas rises up through the washing chamber 22R and passes through the heat exchange chamber 31R. As it passes through the heat exchange chamber 31R, the gas receives part of the heat stored inside the heat exchanger located in the heat exchange chamber 31R during a previous cycle, and therefore starts to increase its temperature. For example, the gas entering the apparatus 1 may have a temperature of between 20°C and 40°C at the inlet of the operative input branch 3R and, after passing through the heat exchange chamber 31R, may have a temperature of about 800°C (i.e. close to the temperature of the combustion chamber 41).

The gas then reaches the combustion chamber 41. Inside the combustion chamber 41, the burner 42 heats the gas to the oxidation temperature of the pollutant contained therein. For example, in the case of methylene chloride, the temperature inside the oxidation chamber 41 is preferably between 800°C and 950°C. The combustion induces a break-down of the methylene chloride and produces, as a reaction product, two moles of chlorine radicals and two moles of hydrogen radicals. The decomposition reaction is described by the following formula:

CH₂Cl₂ + O₂ + ΔT → CO₂ + 2CI. + 2H.

where ΔT denotes the heat necessary for splitting a molecule of methylene chloride and is preferably equal to about 900°C.

The gas containing the chlorine radicals and the hydrogen radicals then exits from the combustion chamber 41 and enters the operative output branch 3L. The flow path of the gas from the operative input branch 3R to the operative output branch 3L through the combustion chamber 41 is schematically denoted in Figure 4a by the arrow A3.

In the operative output branch 3L, the gas passes through the heat exchange chamber 31L and the washing chamber 22L. As it passes through the heat exchange chamber 31L, the heat exchanger contained therein absorbs part of the heat of the gas, which then starts to decrease its temperature.

Cooling of the gas is such that the chlorine radicals and hydrogen radicals bond together so as to form hydrochloric acid (molecular formula: HCI, molecular weight: 36.46 grammes/mole). The reaction of the radicals is defined by the following formula:

2CI. + 2H. → (<200°C) 2HCl

where the brackets indicate that the chlorine radicals and the hydrogen radicals formed in the combustion chamber bond to form hydrochloric acid when the temperature of the gas falls below 200°C.

The molecular ratio of the methylene chloride and hydrochloric acid produced is as follows: 84.93/(36.46+36.46)=1.16. Therefore, assuming for example that the flow of the exhaust gas to be purified has a flowrate of 3000 Nm³/hour, with an average concentration of methylene chloride of 4000 mg/Nm³, the combustion is carried out on 12,000 g/h of methylene chloride, thus generating (12,000 g/h) / 1.16 = 10,340 g/hour of hydrochloric acid, corresponding to 141.80 mol per hour.

While the gas is passing through the bottom part of the heat exchange chamber 31L, it starts to come into contact with the washing liquid delivered by the nozzles 241 of the pipes 240 housed inside the underlying washing chamber 22C. On the one hand, the washing liquid advantageously removes further heat from the gas, reducing further its temperature. On the other hand, the washing liquid neutralizes the hydrochloric acid contained in the gas. In other words, in the apparatus 1 a wet scrubbing of the acid produced by the cooling following thermal oxidation is performed. More particularly, in the case where the washing liquid is an aqueous solution containing sodium hydroxide, the sodium hydroxide reacts with the hydrochloric acid and produces as reaction products water and sodium chloride (molecular formula: NaCI), which are collected in the collection chamber 21L. For example, in order to neutralize 141.80 mol of hydrochloric acid produced in one hour by the combustion and cooling of the methylene chloride, 141.70 mol of sodium hydroxide are required. Since its molecular weight is 40 g/mol, 40 g/mol x 141.80 mol/hour = 5,672 g/h are therefore required. If the washing liquid is an aqueous solution containing 30% of sodium hydroxide, 5672 g/h x 3.3333 = 18900 g/h of washing liquid are therefore required, namely the flowrate of the washing liquid flow must be (18900 g/h) / 1.3 g/l) = 14.540 l/h (1.3 g/l being the specific weight of the washing liquid).

Washing of the gas started at the bottom of the heat exchange chamber 31L is completed while the gas passes through the washing chamber 22L. At the end of washing (which, as mentioned above, results in simultaneous cooling of the gas), the gas has preferably a temperature of between 20°C and 70°C (typically, 40°C). This temperature range advantageously prevents damage to the first housing 20L which, as mentioned above, is made of a material with a low corrodibility such as titanium, Hastelloy or a ferrous alloy lined with an anti-corrosion material, such as fibreglass.

Advantageously, since the first housing 20L is made of material with low corrodibility, even though the wet scrubbing of the hydrochloric acid is not complete, the apparatus 1 does not undergo any corrosion.

The cooled and washed gas is then sucked in through the outlet opening 23OUT-L (as indicated by the arrow A4 in Figure 4a) and flows out of the apparatus 1 through the gas output circuit 26 (as indicated by the arrow A5 in Figure 4a).

The collection chamber 21L is preferably emptied periodically by operating the recirculating pump 5, and the solution of water and sodium chloride contained in it is again introduced into the pipes 240. The system for controlling the pH inside the chamber 21L maintains the neutrality of the solution by means of adjustment of the pH.

During the first operating cycle, while the abovementioned operations are being carried out, a flow of clean air is preferably blown into the non-operative branch 3C through the blowing circuit 27 (as indicated by the arrow A1' in Figure 4a) and the valve 270C (as indicated by the arrow A2' in Figure 4a). The clean air flow advantageously cleans the non-operative branch 3C (in particular, its washing chamber 22C) of any residual impurities. The air flow with the residual impurities passes through the heat exchange chamber 31C and enters into the operative output branch 3L via the combustion chamber 41 (as indicated by the arrow A3' in Figure 4a). The air flow then flows down through the heat exchange chamber 31L into the washing chamber 22L together with the exhaust gas which has undergone combustion and flows out of the operative output branch 3L via the outlet opening 23OUT-L.

At the end of the first operating cycle, the apparatus 1 passes to the second operating cycle (Figure 4b). Preferably, during the transition between the first and the second operating cycles, the valve 250R is closed and the valve 250L is open, such that the operative input branch is now the branch 3L. Moreover, the valve 260L is closed and the valve 260C is open, such that the operative output branch is now the branch 3C. The non-operative branch is therefore now the branch 3R. The valve 270C is therefore closed and the valve 270R of the non-operative branch 3R is open. Moreover, the valves 241 of the washing system 24C are open.

Operation of the apparatus 1 during the second operating cycle is similar to operation during the first operating cycle and therefore will be only briefly summarized. During the second operating cycle, the gas to be purified enters into the operative input branch 3L (arrow A2 in Figure 4b), passes through the heat exchange chamber 31L (inside which it starts to heat), enters into the combustion chamber 41 (inside which the methylene oxide is broken down into chlorine radicals and hydrogen radicals) and enters into the operative output branch 3C (arrow A3 in Figure 4b). In the operative output branch 3C, the gas passes through the heat exchange chamber 31C (inside which it starts to cool and produce hydrochloric acid) and then into the washing chamber 22C (inside which the washing liquid further cools the gas and neutralizes the hydrochloric acid). The purified gas then exits from the operative output branch 3C (arrow A4 in Figure 4b) and is emitted into the atmosphere via the gas output circuit 26. At the same time, a clean air flow enters into the non-operative branch 3R (arrow A2' in Figure 4b), passes through the combustion chamber 41 and the operative output branch 3C (arrow A3' in Figure 4b), and is also emitted into the atmosphere via the gas output circuit 26.

At the end of the second operating cycle, the apparatus 1 passes to the third operating cycle (Figure 4c). Preferably, during the transition between the second and the third operating cycles, the valve 250L is closed and the valve 250C is open, such that the operative input branch is now the branch 3C. Moreover, the valve 260C is closed and the valve 260R is open, such that the operative output branch is now the branch 3R. The non-operative branch is therefore now the branch 3L. The valve 270R is therefore closed and the valve 270L of the non-operative branch 3L is open. Moreover, the valves 241 of the washing system 24R are open.

Operation of the apparatus 1 during the third operating cycle is similar to operation during the first and second operating cycles and therefore will be only briefly summarized. During the third operating cycle, the gas to be purified enters into the operative input branch 3C (arrow A2 in Figure 4c), passes through the heat exchange chamber 31C (inside which it starts to heat), enters into the combustion chamber 41 (inside which the methylene oxide is broken down into chlorine radicals and hydrogen radicals) and enters into the operative output branch 3R (arrow A3 in Figure 4c). In the operative input branch 3R, the gas passes through the heat exchange chamber 31R (inside which it starts to cool and produce hydrochloric acid) and then into the washing chamber 22R (inside which the washing liquid further cools the gas and neutralizes the hydrochloric acid). The purified gas then exits from the operative output branch 3R (arrow A4 in Figure 4c) and is emitted into the atmosphere via the gas output circuit 26. At the same time, a clean air flow enters into the non-operative branch 3L (arrow A2' in Figure 4c), passes through the combustion chamber 41 and the operative output branch 3R (arrow A3' in Figure 4c), and is also emitted into the atmosphere via the gas output circuit 26.

At the end of the third operating cycle, the apparatus 1 again performs the first operating cycle, and so on.

It should be noted that, during operation of the apparatus 1, each branch (for example the branch 3L) is used as an operative output branch in a given cycle, then as an operative input branch in the next cycle, then as the non-operative branch in the cycle thereafter, and so on. When, during an operating cycle, a branch is used as an operative output branch, its heat exchanger receives heat from the gas output from the combustion chamber. When, during the following cycle, the branch is used as an operative input branch, its heat exchanger releases to the gas the heat stored during the course of the preceding cycle. When, during the next cycle, the branch is non-operative, its washing chamber is cleaned again of any impurities remaining from the two previous cycles.

Advantageously, therefore, in a single apparatus, firstly a thermal oxidation is carried out, this producing (during cooling of the gas) hydrochloric acid, followed by wet scrubbing of the hydrochloric acid. This advantageously helps preventing corrosion (and therefore damage) to the surfaces of the apparatus. The wear to which the apparatus is subject over time is therefore considerably less than that which occurs in known thermal combustion units.

The corrosion resistance is further increased by the use of low-corrodibility materials for production of the first housings 20L, 20C, 20R. These low-corrodibility materials (preferably fibreglass-lined metallic materials, but also plastic materials) may advantageously be used owing to the fact that, following thermal oxidation, the temperature of the gases is lowered significantly not only owing to the heat exchange with the heat exchangers, but also as a result of the washing with washing liquid. This advantageously allows the temperature of the output gas to be lowered to values lying within the range of temperatures suitable for use of fibreglass or plastics.

Moreover, advantageously, the apparatus 1 is very simple and compact and may be easily disassembled by separating the first housings 20L, 20C, 20R from the second housings 30L, 30C, 30R and, where necessary, separating the latter from the combustion section 4. This advantageously allows easy transportation of the apparatus 1.

Moreover, the apparatus 1 ensures emission limits which have not been possible hitherto and advantageously has a very compact volume.

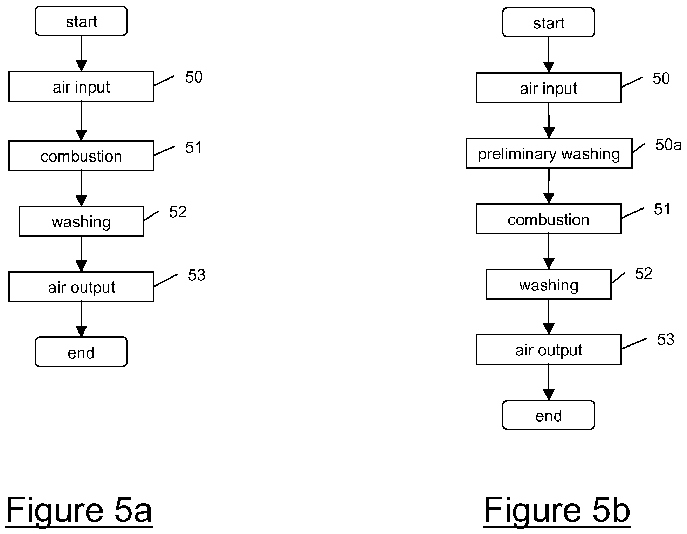

In the apparatus according to Figure 1 as described above, in each cycle the sequence of steps which is carried out on the gas to be purified is therefore the following (see Figure 5a):
- input of the gas via the operative input branch (step 50);
- combustion of the gas inside the combustion chamber (step 51);
- washing of the gas inside the operative output branch (step 52); and
- output of the gas from the operative output branch (step 53).

However, according to advantageous variants of the invention, it is possible to configure the apparatus 1 so that, depending on the pollutants present in the exhaust gas, it performs a different sequence of steps in an operating cycle.

Figure 5b shows a first exemplary sequence of steps performed in each cycle by the apparatus 1. Figure 5b shows that, between the gas input step 50 and the combustion step 51, the apparatus 1 performs a step 50a in which preliminary washing of the gas in the operative input branch is performed (step 50a), before it reaches the combustion chamber. Preferably, step 50a is performed using the same washing liquid used for performing step 52. This advantageously allows any water-soluble substances present in the gas to be purified before subjecting the gas to combustion.

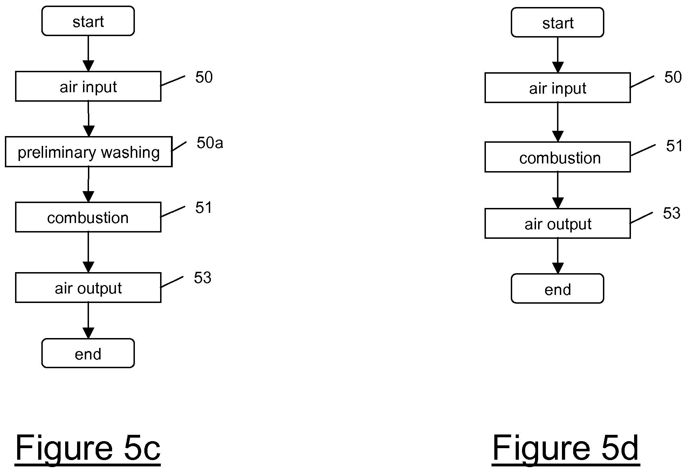

Figure 5c shows a second exemplary sequence of steps performed in each cycle by the apparatus 1. Figure 5c shows that, between the gas input step 50 and combustion step 51, the apparatus 1 performs the abovementioned preliminary washing step 50a, while the washing step 52 in the operative output branch is omitted.

Figure 5d shows a third exemplary sequence of steps performed in each cycle by the apparatus 1. Figure 5d shows that the apparatus 1 does not perform either the preliminary washing (step 50a) in the operative input branch, nor washing for scrubbing of the acids produced by the combustion in the operative output branch (step 52). In this case, therefore, the apparatus 1 basically operates as a regenerative combustion unit of the known type.

In the second and third examplary sequences of steps therefore no wet scrubbing following combustion is performed. The apparatus 1 may therefore be configured to perform the second or third exemplary sequence when the gas to be purified does not contain any substance which produces acids when subject to combustion.

Although operation of the apparatus 1 has been described in detail with reference to only gases containing methylene chloride, it may in general be used to treat industrial exhaust gases containing mixtures of halogenated organic solvents (for example, methylene chloride) and/or non-halogenated organic solvents (for example benzene).

## Claims

1. Method for purifying an industrial exhaust gas by means of an apparatus (1) comprising:
- a combustion chamber (41) having three access points, and
- three heat exchange and washing branches (3L, 3C, 3R), each of said heat exchange and washing branches (3L, 3C, 3R) being connected to a respective access point of said combustion chamber (41) and comprising a heat exchanger and a washing system (24L, 24C, 24R) for said exhaust gas, said heat exchanger being located between said combustion chamber and said washing system;
said method comprising:
i. feeding said exhaust gas to one of said heat exchangers so that the gas receives heat and increases its temperature,
ii. introducing said exhaust gas in said exhaust gas combustion chamber to induce thermal oxidation of at least one pollutant contained in said exhaust gas,
iii. passing said gas subjected to said thermal oxidation through another of said heat exchangers to absorb part of said heat of said gas and decrease its temperature, whereby cooling of said gas produces an acid,
iv. passing said gas through said washing system which sprays a washing liquid to wash said gas and neutralize said acid,
v. collecting said liquid in a collection chamber (21L, 21C, 21R) of said heat exchange and washing branch.

2. Method according to claim 1, **characterized by** comprising a first operating cycle, a second operating cycle and a third operating cycle which are cyclically repeated, wherein:
- during said first operating cycle, in a first heat exchange and washing branch (3R) of said three heat exchange and washing branches (3L, 3C, 3R), said gas receives heat before said thermal oxidation and, in a second heat exchange and washing branch (3L) of said three heat exchange and washing branches (3L, 3C, 3R), said gas releases heat and is sprayed with said washing liquid after said thermal oxidation;
- during said second operating cycle, in said second heat exchange and washing branch (3L) said gas receives heat before said thermal oxidation, and in a third heat exchange and washing branch (3C) of said three heat exchange and washing branches (3L, 3C, 3R) said gas releases heat and is sprayed with said washing liquid after said thermal oxidation; and
- during said third operating cycle, in said third heat exchange and washing branch (3C) said gas receives heat before said thermal oxidation, and in said first heat exchange and washing branch (3R) said gas releases heat and is sprayed with said washing liquid after said thermal oxidation.

3. Method according to claim 2, **characterized in that**:
- during said first operating cycle, a flow of clean air enters into said apparatus (1) through said third heat exchange and washing branch (3C) and exits from said apparatus (1) through said second heat exchange and washing branch (3L);
- during said second operating cycle, a flow of clean air enters into said apparatus (1) through said first heat exchange and washing branch (3R) and exits from said apparatus (1) through said third heat exchange and washing branch (3C); and
- during said third operating cycle, a flow of clean air enters into said apparatus (1) through said second heat exchange and washing branch (3L) and exits from said apparatus (1) through said first heat exchange and washing branch (3R).

4. Method according to any one of the preceding claims, wherein said gas contains a mixture of at least one halogenated organic solvent and/or at least one non-halogenated organic solvent.

5. Method according to any one of the preceding claims, wherein said washing liquid is a basic aqueous solution.

6. Method according to claim 5, wherein the pH of said liquid collected in said collection chamber (21L, 21C, 21R) is adjusted to be maintained neutral.

7. Method according to any one of the preceding claims, wherein a preliminary washing of said exhaust gas is performed before it reaches said combustion chamber.

8. Apparatus (1) for purifying an industrial exhaust gas comprising a combustion chamber (41) having three access points and three heat exchange and washing branches (3L, 3C, 3R), each of said heat exchange and washing branches (3L, 3C, 3R) being connected to a respective access point of said combustion chamber (41) and comprising a heat exchanger and a washing system (24L, 24C, 24R) for said exhaust gas, **characterized in that**:
i. said heat exchanger cools said gas after said thermal oxidation, said cooling producing an acid, and is located between said combustion chamber (41) and said washing system, which sprays said gas with a washing liquid, so as to neutralize said acid;
ii. each of said heat exchange and washing branches (3L, 3C, 3R) comprises a first housing (20L, 20C, 20R) and a second housing (30L, 30C, 30L);
iii. said first housing (20L, 20C, 20R) forms a collection chamber (21L, 21C, 21R) and a washing chamber (22L, 22C, 22R),
iv. said washing chamber is located above said collection chamber,
v. said first housing has walls comprising a metal lined internally and externally with an anti-corrosion material;
vi. said heat exchanger is housed in said second housing (30L, 30C, 30R);
vii. said heat exchanger comprises a bed of ceramic masses and a supporting grid (32L, 32C, 32R) on which said ceramic masses rest.

9. Apparatus according to claim 8, **characterized in that** said first housing (20L, 20C, 20R) is connected to said second housing (30L, 30C, 30R) in a removable manner.

10. Apparatus according to any claims 8-9, wherein each of said heat exchange and washing branches (3L, 3C, 3R) has a blow aperture (23'L, 23'C, 23'R).

11. Apparatus according to any claims 8-10, wherein each of said washing chamber (22L, 22C, 22R) has an outlet opening (23OUT-L, 23OUT-C, 23OUT-R) located on a first side of the apparatus (1) and an inlet opening (23IN-L, 23IN-C, 23IN-R) located on the opposite side of the apparatus (1), each inlet opening (23IN-L, 23IN-C, 23IN-R) being connected to a gas input circuit (25) provided with a respective valve (250L, 250C, 250R), and each outlet opening (23OUT-L, 23OUT-C, 23OUT-R) being connected to a gas output circuit (26) provided with a respective valve (260L, 260C, 260R),

12. Apparatus according to any claims 8-11, **characterized by** comprising a pH control system to measure the pH value of the liquid collected inside said collection chambers (21L, 21C, 21R).

13. Apparatus according to any claims 8-12, **characterized by** comprising a recirculating pump (5) having its inlet connected to the collection chambers (21L, 21C, 21R) and outlet connected to pipes (240) of the washing systems (24L, 24C, 24R), said recirculating pump (5) being provided with a pressure control system and said pipes (240) being provided with nozzles to spray the washing liquid which flows inside said pipes (240).

## Patentansprüche

1. Verfahren zur Reinigung eines industriellen Abgases mit Hilfe eines Apparats (1), aufweisend:
eine Brennkammer (41) mit drei Zugangsstellen, und
drei Wärmetausch- und Waschzweige (3L, 3C, 3R), wobei jeder der Wärmetausch- und Waschzweige (3L, 3C, 3R) mit einer jeweiligen Zugangsstelle der Brennkammer (41) verbunden ist und einen Wärmetauscher und ein Waschsystem (24L, 24C, 24R) für das Abgas aufweist, wobei der Wärmetauscher zwischen der Brennkammer und dem Waschsystem angeordnet ist;
wobei das Verfahren aufweist:
i. Zuführen des Abgases an einen der Wärmetauscher, sodass das Gas Wärme empfängt und die Temperatur ansteigt,
ii. Einbringen des Abgases in die Abgas-Brennkammer, um thermische Oxidation von mindestens einem im Abgas enthaltenen Schadstoff herbeizuführen,
iii. Weitergeben des Gases, das der thermischen Oxidation ausgesetzt war, an einen weiteren der Wärmetauscher, um einen Teil der Wärme des Gases zu absorbieren und die Temperatur zu senken, wobei ein Kühlen des Gases eine Säure produziert,
iv. Weitergeben des Gases an das Waschsystem, das eine Waschflüssigkeit zum Waschen des Gases und zur Neutralisierung der Säure versprüht,
v. Sammeln der Flüssigkeit in einer Sammelkammer (21L, 21C, 21R) des Wärmetausch- und Waschzweigs.

2. Verfahren nach Anspruch 1, **gekennzeichnet durch** Aufweisen eines ersten Arbeitszyklus', eines zweiten Arbeitszyklus' und eines dritten Arbeitszyklus', welche zyklisch wiederholt werden, wobei:
das Gas während des ersten Arbeitszyklus' in einem ersten Wärmetausch- und Waschzweig (3R) der drei Wärmetausch- und Waschzweige (3L, 3C, 3R) vor der thermischen Oxidation Wärme empfängt und das Gas in einem zweiten Wärmetausch- und Waschzweig (3L) der drei Wärmetausch- und Waschzweige (3L, 3C, 3R) Wärme freisetzt und nach der thermischen Oxidation mit der Waschflüssigkeit besprüht wird;
das Gas während des zweiten Arbeitszyklus' im zweiten Wärmetausch- und Waschzweig (3L) vor der thermischen Oxidation Wärme empfängt und das Gas in einem dritten Wärmetausch- und Waschzweig (3C) der drei Wärmetausch- und Waschzweige (3L, 3C, 3R) Wärme freisetzt und nach der thermischen Oxidation mit der Waschflüssigkeit besprüht wird;
das Gas während des dritten Arbeitszyklus' im dritten Wärmetausch- und Waschzweig (3C) vor der thermischen Oxidation Wärme empfängt und das Gas im ersten Wärmetausch- und Waschzweig (3R) Wärme freisetzt und nach der thermischen Oxidation mit der Waschflüssigkeit besprüht wird.

3. Verfahren nach Anspruch 2, **dadurch gekennzeichnet, dass**:
während des ersten Arbeitszyklus' ein Strom saubere Luft durch den dritten Wärmetausch- und Waschzweig (3C) in den Apparat (1) eintritt und durch den zweiten Wärmetausch- und Waschzweig (3L) aus dem Apparat (1) austritt;
während des zweiten Arbeitszyklus' ein Strom saubere Luft durch den ersten Wärmetausch- und Waschzweig (3R) in den Apparat (1) eintritt und durch den dritten Wärmetausch- und Waschzweig (3C) aus dem Apparat (1) austritt; und
während des dritten Arbeitszyklus' ein Strom saubere Luft durch den zweiten Wärmetausch- und Waschzweig (3L) in den Apparat (1) eintritt und durch den ersten Wärmetausch- und Waschzweig (3R) aus dem Apparat (1) austritt.

4. Verfahren nach einem der vorangegangenen Ansprüche, wobei das Gas eine Mischung aus mindestens einem halogenierten organischen Lösungsmittel und/oder mindestens einem nicht-halogenierten organischen Lösungsmittel ist.

5. Verfahren nach einem der vorangegangenen Ansprüche, wobei die Waschflüssigkeit eine basische wässrige Lösung ist.

6. Verfahren nach Anspruch 5, wobei der pH der in der Sammelkammer (21L, 21C, 21C) gesammelten Flüssigkeit angepasst wird, um neutral gehalten zu werden.

7. Verfahren nach einem der vorangegangenen Ansprüche, wobei ein vorläufiges Waschen des Abgases durchgeführt wird, bevor es die Brennkammer erreicht.

8. Apparat (1) zur Reinigung eines industriellen Abgases, der eine Brennkammer (41) mit drei Zugangsstellen und drei Wärmetausch- und Waschzweigen (3L, 3C, 3R) aufweist, wobei jeder der Wärmetausch- und Waschzweige (3L, 3C, 3R) mit einer jeweiligen Zugangsstelle der Brennkammer (41) verbunden ist und einen Wärmetauscher und ein Waschsystem (24L, 24C, 24R) für das Abgas aufweist, **dadurch gekennzeichnet, dass**:
i. der Wärmetauscher das Gas nach der thermischen Oxidation kühlt, wobei das Kühlen eine Säure produziert, und zwischen der Brennkammer (41) und dem Waschsystem, welches das Gas mit einer Waschflüssigkeit besprüht, um die Säure zu neutralisieren, angeordnet ist;
ii. jeder der Wärmetausch- und Waschzweige (3L, 3C, 3R) ein erstes Gehäuse (20L, 20C, 20R) und ein zweites Gehäuse (30L, 30C, 30R) aufweist;
iii. das erste Gehäuse (20L, 20C, 20R) eine Sammelkammer (21L, 21C, 21R) und eine Waschkammer (22L, 22C, 22R) bildet,
iv. die Waschkammer über der Sammelkammer angeordnet ist,
v. das erste Gehäuse Wände aufweist, die ein Metall aufweisen, das innen und außen mit einem korrosionsbeständigen Material ausgekleidet ist;
vi. der Wärmetauscher im zweiten Gehäuse (30L, 30C, 30R) untergebracht ist;
vii. der Wärmetauscher eine Schicht aus keramischen Massen und einen Tragrost (32L, 32C, 32R), auf dem die keramischen Massen ruhen, aufweist.

9. Apparat nach Anspruch 8, **dadurch gekennzeichnet, dass** das erste Gehäuse (20L, 20C, 20R) abnehmbar mit dem zweiten Gehäuse (30L, 30C, 30R) verbunden ist.

10. Apparat nach einem der Ansprüche 8-9, wobei jeder der Wärmetausch- und Waschzweige (3L, 3C, 3R) eine Blasöffnung (23'L, 23'C, 23'R) aufweist.

11. Apparat nach einem der Ansprüche 8-10, wobei jede der Waschkammern (22L, 22C, 22R) eine Auslassöffnung (23OUT-L, 23OUT-C, 23OUT-R), die auf einer ersten Seite des Apparats (1) angeordnet ist, und eine Einlassöffnung (23IN-L, 23IN-C, 23IN-R), die auf der gegenüberliegenden Seite des Apparats (1) angeordnet ist, aufweist, wobei jede Einlassöffnung (23IN-L, 23IN-C, 23IN-R) mit einer Gas-Eingabeschaltung (25), die über ein jeweiliges Ventil (250L, 250C, 250R) verfügt, verbunden ist und jede Auslassöffnung (23OUT-L, 23OUT-C, 23OUT-R) mit einer Gas-Ausgabeschaltung (26), die über ein jeweiliges Ventil (260L, 260C, 260R) verfügt, verbunden ist.

12. Apparat nach einem der Ansprüche 8-11, **gekennzeichnet durch** Aufweisen eines pH-Steuersystems, um den pH-Wert der in den Sammelkammern (21L, 21C, 21R) gesammelten Flüssigkeit zu messen.

13. Apparat nach einem der Ansprüche 8-12, **gekennzeichnet durch** Aufweisen einer Rückführpumpe (5), deren Einlass mit den Sammelkammern (21L, 21C, 21R) verbunden ist und deren Auslass mit Rohren (240) des Waschsystems (24L, 24C, 24R) verbunden ist, wobei die Rückführpumpe (5) über ein Druck-Steuersystem verfügt und die Rohre (240) über Düsen zum Versprühen der Waschflüssigkeit, welche in den Rohren (204) fließt, verfügt.

## Revendications

1. Procédé de purification d'un gaz d'échappement industriel au moyen d'un appareil (1), comprenant :
- une chambre de combustion (41) ayant trois points d'accès et
- trois branches d'échange de chaleur et de lavage (3L, 3C, 3R), chacune desdites branches d'échange de chaleur de lavage (3L, 3C, 3R) étant raccordée à un point d'accès respectif de ladite chambre de combustion (41) et comprenant un échangeur de chaleur et un système de lavage (24L, 24C, 24R) pour ledit gaz d'échappement, ledit échangeur de chaleur étant situé entre ladite chambre de combustion et ledit système de lavage ;
ledit procédé comprenant :
i. l'acheminement dudit gaz d'échappement à l'un desdits échangeurs de chaleur de sorte que le gaz reçoive de la chaleur et augmente sa température,
ii. l'introduction dudit gaz d'échappement dans ladite chambre de combustion de gaz d'échappement pour induire une oxydation thermique d'au moins un polluant contenu dans ledit gaz d'échappement,
iii. le passage dudit gaz soumis à ladite oxydation thermique à travers un autre desdits échangeurs de chaleur afin d'absorber une partie de ladite chaleur dudit gaz et réduire sa température, en sorte que le refroidissement dudit gaz produise un acide,
iv. le passage dudit gaz à travers ledit système de lavage qui pulvérise un liquide de lavage pour laver ledit gaz et neutraliser ledit acide,
v. le recueil dudit liquide dans une chambre collectrice (21L, 21C, 21R) de ladite branche d'échange de chaleur et de lavage.

2. Procédé selon la revendication 1, **caractérisé en ce qu'**il comprend un premier cycle opératoire, un deuxième cycle opératoire et un troisième cycle opératoire qui se répètent de manière cyclique, dans lequel :
- au cours dudit premier cycle opératoire, dans une première branche d'échange de chaleur et de lavage (3R) desdites trois branches d'échange de chaleur et de lavage (3L, 3C, 3R), ledit gaz reçoit de la chaleur avant ladite oxydation thermique et, dans une deuxième branche d'échange de chaleur et de lavage (3L) desdites trois branches d'échange de chaleur et de lavage (3L, 3C, 3R), ledit gaz libère de la chaleur et est pulvérisé avec ledit liquide de lavage après ladite oxydation thermique ;
- au cours dudit deuxième cycle opératoire, dans ladite deuxième branche d'échange de chaleur et de lavage (3L), ledit gaz reçoit de la chaleur avant ladite oxydation thermique et, dans une troisième branche d'échange de chaleur et de lavage (3C) desdites trois branches d'échange de chaleur et de lavage (3L, 3C, 3R), ledit gaz libère de la chaleur et est pulvérisé avec ledit liquide de lavage après ladite oxydation thermique ; et
- au cours dudit troisième cycle opératoire, dans ladite troisième branche d'échange de chaleur et de lavage (3C), ledit gaz reçoit de la chaleur avant ladite oxydation thermique et, dans ladite première branche d'échange de chaleur et de lavage (3R), ledit gaz libère de la chaleur et est pulvérisé avec ledit liquide de lavage après ladite oxydation thermique.

3. Procédé selon la revendication 2, **caractérisé en ce que** :
- au cours dudit premier cycle opératoire, un écoulement d'air propre pénètre dans ledit appareil (1) à travers ladite troisième branche d'échange de chaleur et de lavage (3C) et sort dudit appareil (1) à travers ladite deuxième branche d'échange de chaleur et de lavage (3L) ;
- au cours dudit deuxième cycle opératoire, un écoulement d'air propre pénètre dans ledit appareil (1) à travers ladite première branche d'échange de chaleur et de lavage (3R) et sort dudit appareil (1) à travers ladite troisième branche d'échange de chaleur et de lavage (3C) ; et
- au cours dudit troisième cycle opératoire, un écoulement d'air propre pénètre dans ledit appareil (1) à travers ladite deuxième branche d'échange de chaleur et de lavage (3L) et sort dudit appareil (1) à travers ladite première branche d'échange de chaleur et de lavage (3R).

4. Procédé selon l'une quelconque des revendications précédentes, dans lequel ledit gaz contient un mélange d'au moins un solvant organique halogéné et/ou d'au moins un solvant organique non halogéné.

5. Procédé selon l'une quelconque des revendications précédentes, dans lequel ledit liquide de lavage est une solution aqueuse basique.

6. Procédé selon la revendication 5, dans lequel le pH dudit liquide recueilli dans ladite chambre collectrice (21L, 21C, 21R) est ajusté pour être maintenu neutre.

7. Procédé selon l'une quelconque des revendications précédentes, dans lequel un lavage préliminaire dudit gaz d'échappement est effectué avant qu'il n'atteigne ladite chambre de combustion.

8. Appareil (1) pour purifier un gaz d'échappement industriel comprenant une chambre de combustion (41) ayant trois points d'accès et trois branches d'échange de chaleur et de lavage (3L, 3C, 3R), chacune desdites branches d'échange de chaleur et de lavage (3L, 3C, 3R) étant raccordée à un point d'accès respectif de ladite chambre de combustion (41) et comprenant un échangeur de chaleur et un système de lavage (24L, 24C, 24R) pour ledit gaz d'échappement, **caractérisé en ce que** :
i. ledit échangeur de chaleur refroidit ledit gaz après ladite oxydation thermique, ledit refroidissement produisant un acide, et est situé entre ladite chambre de combustion (41) et ledit système de lavage, qui pulvérise ledit gaz avec un liquide de lavage, afin de neutraliser ledit acide ;
ii. chacune desdites branches d'échange de chaleur et de lavage (3L, 3C, 3R) comprend un premier logement (20L, 20C, 20R) et un second logement (30L, 30C, 30L) ;
iii. ledit premier logement (20L, 20C, 20R) forme une chambre collectrice (21L, 21C, 21R) et une chambre de lavage (22L, 22C, 22R),
iv. ladite chambre de lavage est située au-dessus de ladite chambre collectrice,
v. ledit premier logement a des parois comprenant un métal garni intérieurement et extérieurement d'un matériau anticorrosion ;
vi. ledit échangeur de chaleur est logé dans ledit second logement (30L, 30C, 30R) ;
vii. ledit échangeur de chaleur comprend un lit de masses céramiques et une grille de support (32L, 32C, 32R) sur laquelle lesdites masses céramiques reposent.

9. Appareil selon la revendication 8, **caractérisé en ce que** ledit premier logement (20L, 20C, 20R) est raccordé audit second logement (30L, 30C, 30R) de manière amovible.

10. Appareil selon l'une quelconque des revendications 8-9, dans lequel chacune desdites branches d'échange de chaleur et de lavage (3L, 3C, 3R) a une ouverture de purge (23'L, 23'C, 23'R).

11. Appareil selon l'une quelconque des revendications 8-10, dans lequel chacune desdites chambres de lavage (22L, 22C, 22R) a une ouverture de sortie (23OUT-L, 23OUT-C, 23OUT-R) située sur un premier côté de l'appareil (1) et une ouverture d'entrée (23IN-L, 23IN-C, 23IN-R) située sur le côté opposé de l'appareil (1), chaque ouverture d'entrée (23IN-L, 23IN-C, 23IN-R) étant raccordé à un circuit d'entrée de gaz (25) pourvu d'une vanne respective (250L, 250C, 250R) et chaque ouverture de sortie (23OUT-L, 23OUT-C, 23OUT-R) étant raccordé à un circuit de sortie de gaz (26) pourvu d'une vanne respective (260L, 260C, 260R).

12. Appareil selon l'une quelconque des revendications 8-11, **caractérisé en ce qu'**il comprend un système de commande de pH pour mesurer la valeur du pH du liquide recueilli à l'intérieur desdites chambres collectrices (21L, 21C, 21R).

13. Appareil selon l'une quelconque des revendications 8-12, **caractérisé en ce qu'**il comprend une pompe de recirculation (5) ayant son entrée raccordée aux chambres collectrices (21L, 21C, 21R) et sa sortie raccordée à des tuyaux (240) des systèmes de lavage (24L, 24C, 24R), ladite pompe de recirculation (5) étant pourvue d'un système de commande de pression et lesdits tuyaux (240) étant pourvus de buses pour pulvériser le liquide de lavage qui s'écoule à l'intérieur desdits tuyaux (240).
